# EUROPÄISCHE PATENTANMELDUNG

(11) **EP 1 912 226 A2**
(43) Veröffentlichungstag der Anmeldung: **16.04.2008**
(21) Anmeldenummer: 07115830.7
(22) Anmeldetag: 06.09.2007
(51) Int. Cl.: H01F 7/08

(54) **Magnetventil und zugehörige Fluidbaugruppe**

(30) Priorität: 10.10.2006 DE 102006047921
(71) Anmelder: ROBERT BOSCH GMBH, 70442 Stuttgart (DE)
(72) Erfinder: Acar, Sezgin, 71638, Ludwigsburg (DE); Kolarsky, Jens, 74321, Bietigheim/Bissingen (DE); Haas, Martin, 71720, Oberstenfeld (DE); Mailaender, Wolfgang, 71282, Hemmingen (DE); Ludewig, Erich, 74321, Bietigheim-Bissingen (DE); Ambrosi, Massimiliano, 71672, Marbach (DE); Pic, Jean-Guillaume, 71691, Freiberg (DE); Karl, Andreas, 71672, Marbach/Neckar (DE); Weitze, Thomas, 71701, Schwieberdingen (DE)

(57) **Zusammenfassung**

Die Erfindung betrifft ein Magnetventil mit einer Magnetbaugruppe (20), die ein Eisenkreisoberteil, ein Eisenkreisunterteil und einen mit einer Spulenwicklung (24) bewickelten Wicklungsträger (25) umfasst, und eine zugehörige Ventilbaugruppe mit mindestens einem solchen Magnetventil. Erfindungsgemäß ist das Eisenkreisoberteil aus einem Gehäusemantel (21) gebildet ist, der ein Gehäuseoberteil (23) und drei mit dem Gehäuseoberteil (23) verbundene Gehäuseschenkel (22) umfasst, wobei der dreischenklige Gehäusemantel (21) zur Bildung eines Magnetkreises (11) spaltfrei mit dem Eisenkreisunterteil verbunden ist.

## Beschreibung

### Stand der Technik

Die Erfindung betrifft ein Magnetventil nach der Gattung des unabhängigen Patentanspruchs 1 und eine zugehörige Fluidbaugruppe mit mindestens einem solchen Magnetventil.

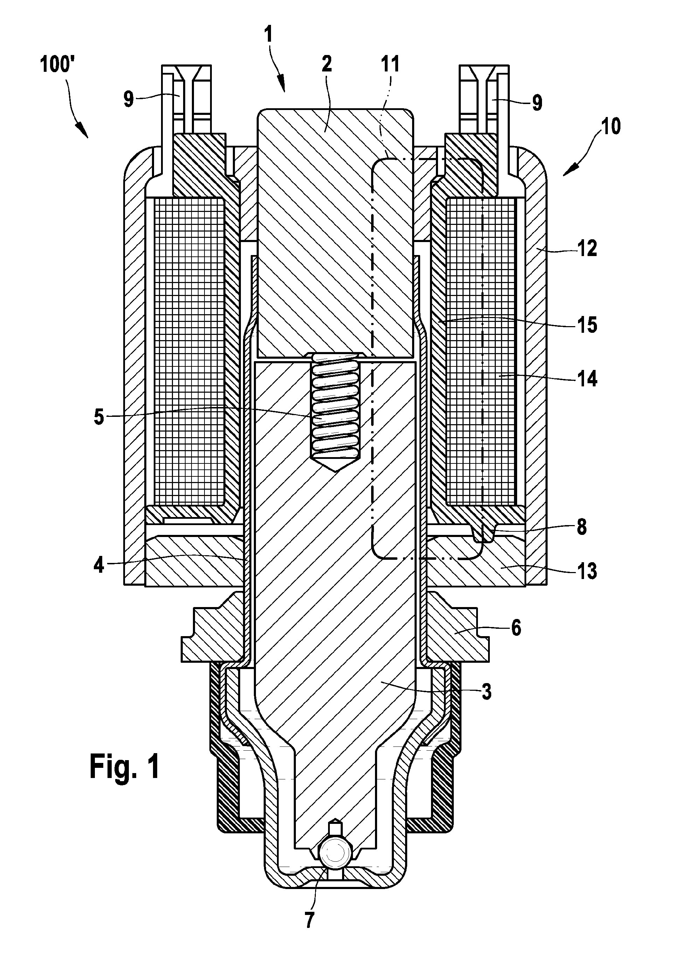

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliche Magnetventil 100' eine Magnetbaugruppe 10 zur Erzeugung eines Magnetflusses 11, die ein als tiefgezogener runder Gehäusemantel ausgeführtes Eisenkreisoberteil 12, ein als gestanzte Abdeckscheibe ausgeführtes Eisenkreisunterteil 13 und einen mit einer Spulenwicklung 14 bewickelten Wicklungsträger 15 umfasst, und eine Ventilpatrone 1, die einen Polkern 2, einen Ventileinsatz 3, eine Ventilhülse 4, eine Rückstellfeder 5, eine Ventilbuchse 6 und einen Ventilsitz 7 umfasst. Die auf den Wicklungsträger 15 gewickelte Spulenwicklung 14 bildet eine elektrische Spule, die über elektrische Anschlüsse 9 ansteuerbar ist. Der Ventileinsatz 3 leitet den von der Magnetbaugruppe 10 eingeleiteten Magnetfluss 11 axial über einen Luftspalt in Richtung Polkern 2. Durch Bestromung der Spulenwicklung 14 über die elektrischen Anschlüsse 9 und den dadurch erzeugten Magnetfluss 11 wird der Ventileinsatz 3 entgegen der Kraft der Rückstellfeder 5 gegen den Polkern 2 bewegt und ein Fluiddurchfluss zwischen einer Einlassöffnung und einer Auslassöffnung des Magnetventils 100' über einen entsprechenden Schließkörper und den Ventilsitz 7 eingestellt. Bei der Herstellung der Magnetbaugruppe 10 wird zur Verbindung des Eisenkreisoberteils 12 und des Eisenkreisunterteils 13 die Abdeckscheibe in den rohrähnlichen Gehäusemantel eingepresst. Der Wicklungsträger 15 wird durch Abstandsnoppen 8 in einer axialen Lage gehalten. Zudem dienen die Abstandsnoppen 8 als Toleranzausgleich zwischen dem aus Eisenkreisoberteil 12 und Eisenkreisunterteil 13 gebildeten Eisenkreis und dem Wicklungsträger 15. Der Toleranzausgleich wird über das Verpressen der Abstandsnoppen 8 beim Eindrücken der Abdeckscheibe in den Gehäusemantel erreicht. Zusätzlich dienen die Abstandsnoppen 8 zur Fixierung und zum Ausrichten des Wicklungsträgers 15 beim Bewickeln auf einem nicht dargestellten Wickeldorn.

### Offenbarung der Erfindung

Das erfindungsgemäße Magnetventil mit den Merkmalen des unabhängigen Patentanspruchs 1 hat demgegenüber den Vorteil, dass ein Eisenkreisoberteil einer Magnetbaugruppe aus einem Gehäusemantel gebildet ist, der ein Gehäuseoberteil und drei mit dem Gehäuseoberteil verbundene Gehäuseschenkel umfasst, wobei der dreischenklige Gehäusemantel zur Bildung eines Magnetkreises spaltfrei mit einem Eisenkreisunterteil der Magnetbaugruppe verbunden ist. Der Magnetfluss wird von einer Spule erzeugt, die aus einer auf einen Wicklungsträger gewickelten Spulenwicklung gebildet wird. Die erfindungsgemäße Magnetbaugruppe stellt in vorteilhafter Weise mehr Platz für eine größere Spulenwicklung zur Verfügung, so dass die erfindungsgemäße Magnetbaugruppe eine höhere Magnetkraft erzeugen kann. Die erfindungsgemäße Magnetbaugruppe vergrößert den maximalen möglichen Außendurchmesser der Spulenwicklung, so dass zusätzliche Lagen innerhalb des Gehäusemantels untergebracht werden können. Die Gehäuseschenkel werden beispielsweise in Eckbereichen angeordnet, die am Rand um eine im Wesentlichen runde Spulenwicklung angeordnet sind und die von einem herkömmlichen Magnetventil mit einem runden Gehäusemantel nicht genutzt werden, so dass in vorteilhafter Weise der zur Verfügung stehende Bauraum optimal genutzt und eine größere Magnetkraft bereitgestellt werden kann.

Das erfindungsgemäße Magnetventil kann beispielsweise in Fluidbaugruppen verwendet werden, die in einem Antiblockiersystem (ABS) oder einem Antriebsschlupfregelsystem (ASR-System) oder einem elektronischen Stabilitätsprogrammsystem (ESP-System) eingesetzt werden.

Durch die in den abhängigen Ansprüchen aufgeführten Maßnahmen und Weiterbildungen sind vorteilhafte Verbesserungen des im unabhängigen Patentanspruch 1 angegebenen Magnetventils und der im unabhängigen Patentanspruch 9 angegebenen Fluidbaugruppe möglich.

Besonders vorteilhaft ist, dass der dreischenklige Gehäusemantel als Formteil ausgeführt ist, das mit einem MIM-Verfahren (Metal Injection Molding) hergestellt ist. Aufgrund der spritztechnisch ähnlichen Gestaltungsmöglichkeiten des MIM-Verfahrens (Metal Injection Molding) kann die komplexe Geometrie des dreischenkligen Gehäusemantels einfach hergestellt werden.

In Ausgestaltung des erfindungsgemäßen Magnetventils ist das Eisenkreisunterteil als Abdeckplatte ausgeführt, die formschlüssig an den dreischenkligen Gehäusemantel angepresst ist. Zur formschlüssigen Verbindung ist an die Gehäuseschenkel beispielsweise jeweils ein Zapfen angeformt. Die angeformten Zapfen werden jeweils mit einer zugehörigen abgestuften Bohrung in der Abdeckplatte verstemmt. Die zur Verstemmung benötigten Zapfen können bei Verwendung des MIM-Verfahrens in vorteilhafter Weise kosten neutral hergestellt werden. Die Art der Verbindung stellt sicher, dass das Eisenkreisunterteil formschlüssig mit dem Eisenkreisoberteil verbunden wird. Mit Hilfe eines Führungsdorns können die Eisenkreisteile beim Verpressen der Zapfen radial zueinander genauer ausgerichtet werden, als es bei dem herkömmlichen Einpressen der Abdeckscheibe in den runden Gehäusemantel möglich ist. Zudem wird durch das Verstemmen der Zapfen verhindert, dass die Gehäuseschenkel während des Verbindungsvorgangs aufgebogen werden. Während des Verbindungsvorgangs werden die an den Gehäuseschenkeln angebrachten Zapfen durch die abgestuften Bohrungen in der Abdeckplatte eingeführt. Danach werden die Zapfen stirnseitig gestaucht, wobei das Material des jeweiligen Zapfens in die stirnseitige Vertiefung der abgestuften Bohrung fließt und so die Eisenkreisteile miteinander verbindet.

In weiterer Ausgestaltung des erfindungsgemäßen Magnetventils sind seitlich am Wicklungsträger Fixierlaschen angebracht, die unterhalb der Auflagefläche des Wicklungsträgers auf der Abdeckplatte in Aussparungen eingreifen, die in der Abdeckplatte angeordnet sind. Die Enden der Fixierlaschen sind beispielsweise so groß ausgeführt, dass sie unter Ecken der Gehäuseschenkel des dreischenkligen Gehäusemantels ragen, wodurch in vorteilhafter Weise verhindert wird, dass der Wicklungsträger axial von der Auflagefläche wegrutscht. Die Fixierlaschen ersetzten die herkömmlichen Abstandsnoppen, so dass in vorteilhafter Weise das Verdrücken der Abstandsnoppen entfällt. Zudem steht durch den Wegfall der Abstandsnoppen innerhalb des Gehäusemantels mehr Bauraum für die Spulenwicklung zur Verfügung, so dass bei gleichem Bauraum des Eisenkreises mehr Magnetkraft zur Verfügung gestellt werden kann.

In Ausgestaltung der erfindungsgemäßen Fluidbaugruppe ist der dreischenklige Gehäusemantel des mindestens einen Magnetventils in Abhängigkeit vom vorhandenen Bauraum auf der Fluidbaugruppe ausgerichtet, so dass der zur Verfügung gestellte Bauraum auf der Fluidbaugruppe optimal genutzt werden kann.

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. In den Zeichnungen bezeichnen gleiche Bezugszeichen Elemente bzw. Komponenten, welche gleiche bzw. analoge Funktionen ausführen.

### Kurze Beschreibung der Zeichnungen

Fig. 1 zeigt eine schematische Schnittdarstellung eines herkömmlichen Magnetventils.

Fig. 2 zeigt eine perspektivische Darstellung einer Magnetbaugruppe für ein erfindungsgemäßes Magnetventil.

Fig. 3 zeigt eine weitere perspektivische Darstellung der Magnetbaugruppe für ein erfindungsgemäßes Magnetventil.

Fig. 4 zeigt eine Ansicht von unten der Magnetbaugruppe für ein erfindungsgemäßes Magnetventil.

Fig. 5 zeigt eine Draufsicht der Magnetbaugruppe für ein erfindungsgemäßes Magnetventil.

Fig. 6 zeigt eine Schnittdarstellung der Magnetbaugruppe für ein erfindungsgemäßes Magnetventil entlang der Schnittlinie VI-VI in Fig. 5.

Fig. 7 zeigt eine Darstellung eines Details VII der Magnetbaugruppe für ein erfindungsgemäßes Magnetventil aus Fig. 6.

Fig. 8 zeigt eine Schnittdarstellung der Magnetbaugruppe für ein erfindungsgemäßes Magnetventil entlang der Schnittlinie VIII-VIII in Fig. 5.

Fig. 9 zeigt eine Schnittdarstellung der Magnetbaugruppe für ein erfindungsgemäßes Magnetventil entlang der Schnittlinie IX-IX in Fig. 5.

Fig. 10 zeigt eine schematische Schnittdarstellung der Magnetbaugruppe für ein erfindungsgemäßes Magnetventil während einer Verstemmung eines Gehäusemantels mit einer Abdeckplatte.

Fig. 11 zeigt eine Darstellung eines Details XI aus Fig. 10.

Fig. 12 zeigt eine Schnittdarstellung der Magnetbaugruppe für ein erfindungsgemäßes Magnetventil entlang der Schnittlinie XII-XII in Fig. 5.

Fig. 13 zeigt eine Seitenansicht der Magnetbaugruppe für ein erfindungsgemäßes Magnetventil.

Fig. 14 zeigt eine Darstellung eines Details XIV aus Fig. 3.

Fig. 15 zeigt eine Grundfläche einer herkömmlichen Magnetbaugruppe für ein Magnetventil.

Fig. 16 zeigt eine Darstellung einer Grundfläche der Magnetbaugruppe für ein erfindungsgemäßes Magnetventil.

Fig. 17 zeigt eine Draufsicht auf eine Fluidbaugruppe mit mindestens einem erfindungsgemäßen Magnetventil.

### Ausführungsformen der Erfindung

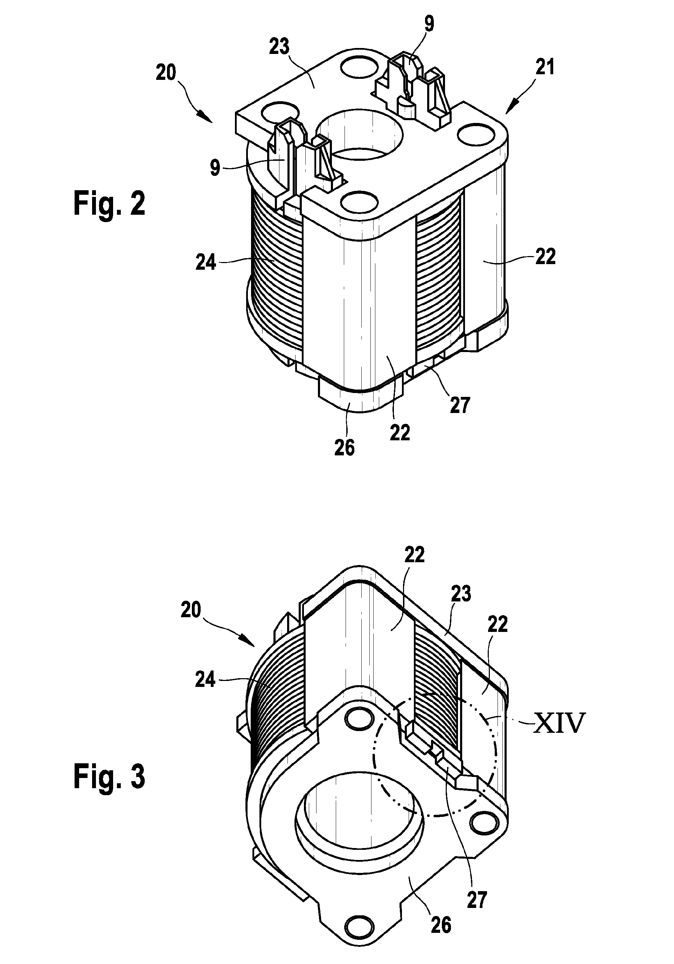

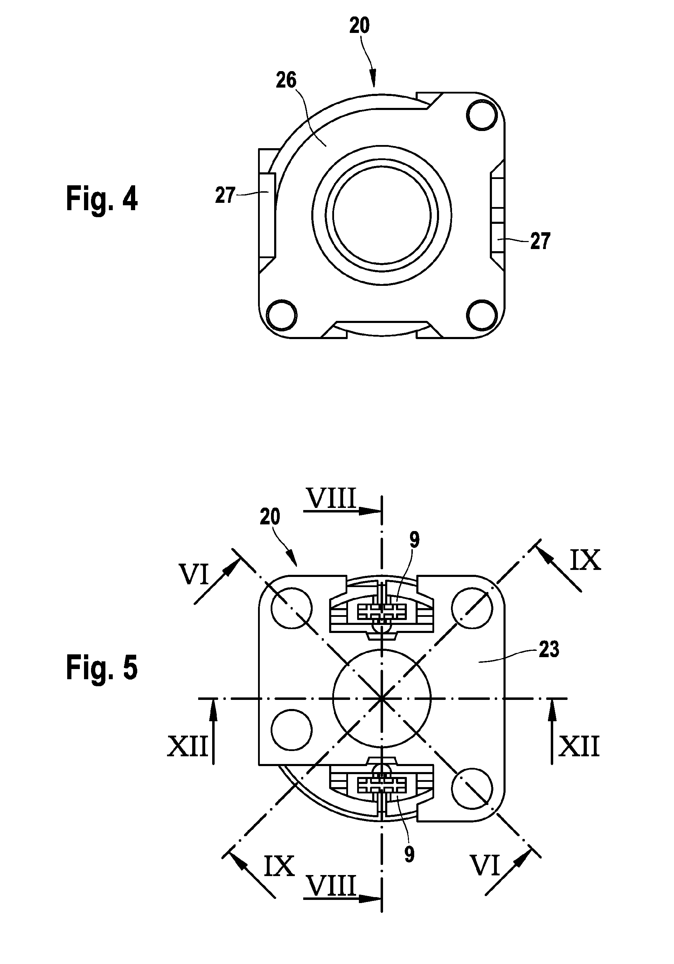

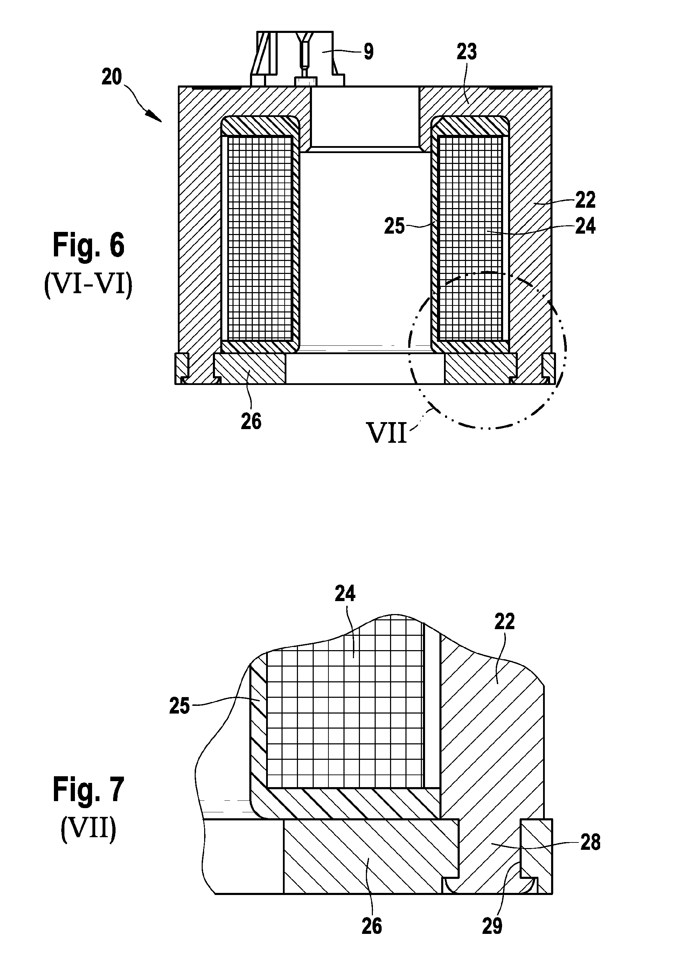

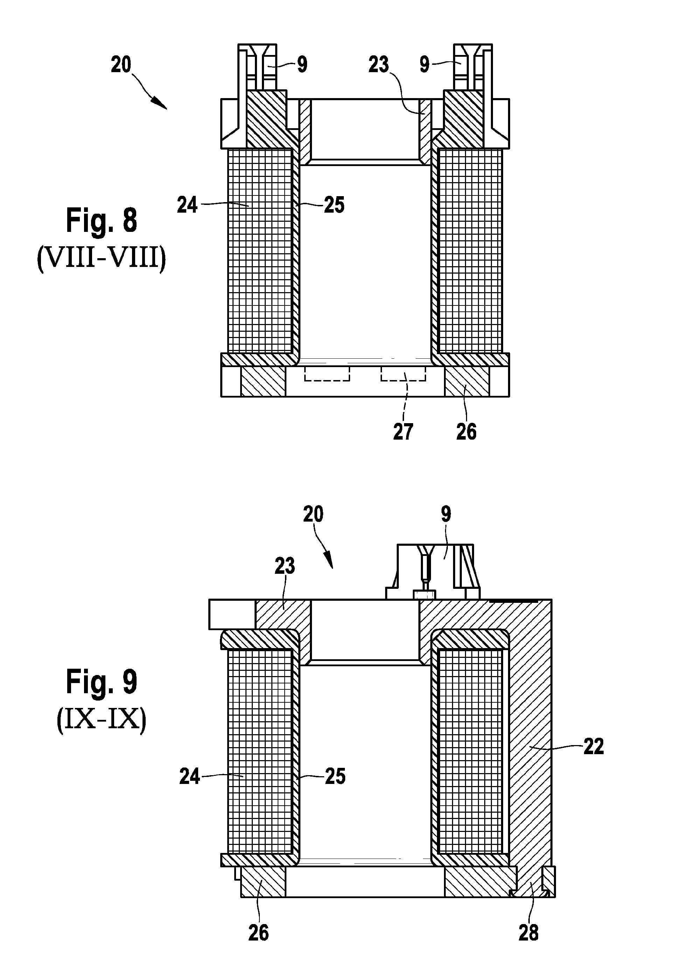

Fig. 2 bis 14 zeigen verschiedene Ansichten und Schnittdarstellungen der erfindungsgemäßen Magnetbaugruppe 20, die gemeinsam mit einer Ventilpatrone ein erfindungsgemäßes Magnetventil 100 bildet. Als Ventilpatrone kann beispielsweise die aus dem Stand der Technik bekannte und in Fig. 1 dargestellte Ventilpatrone 1 verwendet werden. Die Verwendung der erfindungsgemäßen Magnetbaugruppe 20 ist aber nicht auf die in Fig. 1 dargestellte Ventilbaugruppe 1 beschränkt. Die erfindungsgemäße Magnetbaugruppe 20 erzeugt den erforderlichen Magnetfluss, um einen Fluiddurchfluss zwischen mindestens einer Einlassöffnung und mindestens einer Auslassöffnung des Magnetventils 100 über mindestens einen entsprechenden Schließkörper und mindestens einen Ventilsitz einzustellen.

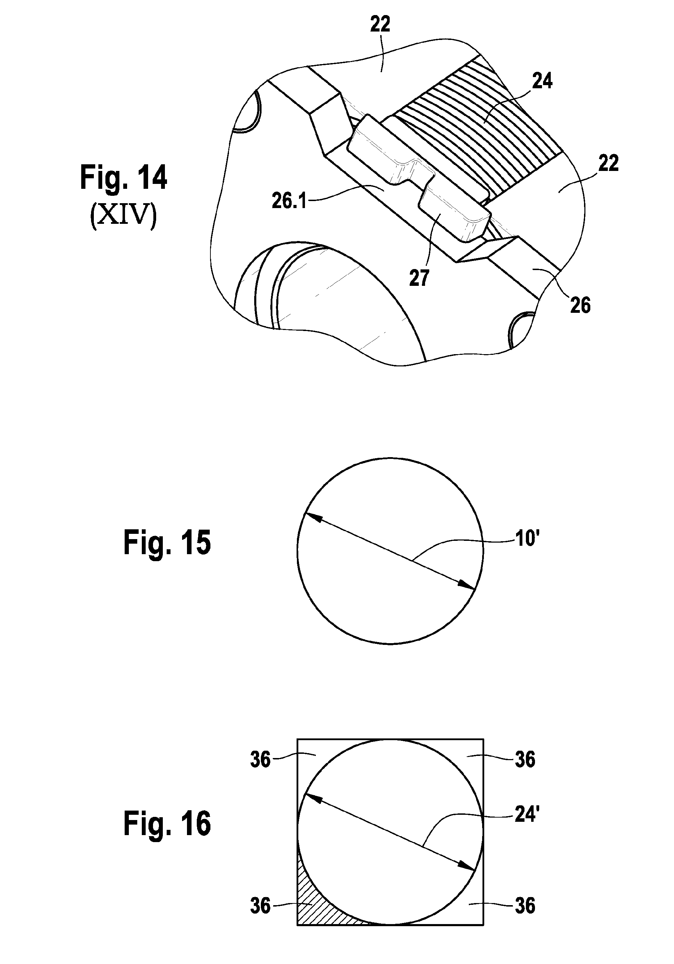

Wie aus Fig. 2 bis 14 ersichtlich ist, umfasst die Magnetbaugruppe 20 für ein erfindungsgemäßes Magnetventil 100 einen Gehäusemantel 21, der ein Gehäuseoberteil 23 und drei mit dem Gehäuseoberteil 23 verbundene Gehäuseschenkel 22 umfasst, und eine Abdeckplatte 26, die formschlüssig an den dreischenkligen Gehäusemantel 21 angepresst ist. Die drei Gehäuseschenkel 22 des Gehäusemantels 21 sind in Eckbereichen 36 einer im Wesentlichen quadratischen Grundfläche angeordnet, die in Fig. 16 dargestellt ist, und liegen an einer Außenkontur eines mit einer Spulenwicklung 24 bewickelten Wicklungsträgers 25 an, die einen Spulenwicklungsaußendurchmesser 24' aufweist, der beispielsweise einem Außendurchmesser 10' des runden Gehäusemantels der Magnetbaugruppe 10 des herkömmlichen Magnetventils 100' gemäß Fig. 1 entspricht, deren Grundfläche in Fig. 15 dargestellt ist. Wie weiter aus Fig. 16 ersichtlich ist, ist ein schraffiert dargestellter Eckbereich frei, so dass die erfindungsgemäße Magnetbaugruppe 20 so ausgerichtet werden kann, dass ein bereitgestellter Bauraum optimal ausgenutzt werden kann. Bei der erfindungsgemäßen Magnetbaugruppe 20 ist der maximale Spulenwicklungsaußendurchmesser 24' der Spulenwicklung 24 im Vergleich zu einer herkömmlichen Magnetbaugruppe 10 durch den Ersatz des runden Gehäusemantels vergrößert, so dass zusätzliche Wicklungslagen untergebracht werden können und so eine höhere Magnetkraft zur Verfügung gestellt werden kann. Als Ersatz für den runden Gehäusemantel werden die bislang ungenutzten Eckflächen um den runden Querschnitt des Gehäusemantels als Eisenkreisoberteil genutzt. Die erfindungsgemäße Magnetgruppe 20 nutzt den zur Verfügung stehenden Bauraum besser aus und liefert gleichzeitig eine höhere Magnetkraft. Zur Umsetzung der komplexen Geometrie des dreischenkligen Gehäusemantels 21 eignet sich aufgrund der spritztechnisch ähnlichen Gestaltungsmöglichkeiten insbesondere ein MIM-Verfahren (Metal Injection Molding).

Der Magnetfluss wird von einer elektrischen Spule erzeugt, die aus der auf den Wicklungsträger 25 gewickelten Spulenwicklung 24 gebildet und über elektrische Anschlüsse 9 angesteuert wird. Der Magnetkreis für den von der Spule erzeugten magnetischen Fluss wird durch einen Eisenkreis geschlossen, der ein Eisenkreisoberteil und ein Eisenkreisunterteil umfasst, wobei das Eisenkreisoberteil den dreischenkligen Gehäusemantel 21 und das Eisenkreisunterteil die Abdeckplatte 26 umfasst. Zur Bildung des Magnetkreises ist der dreischenklige Gehäusemantel 21 spaltfrei mit der Abdeckplatte 26 verbunden.

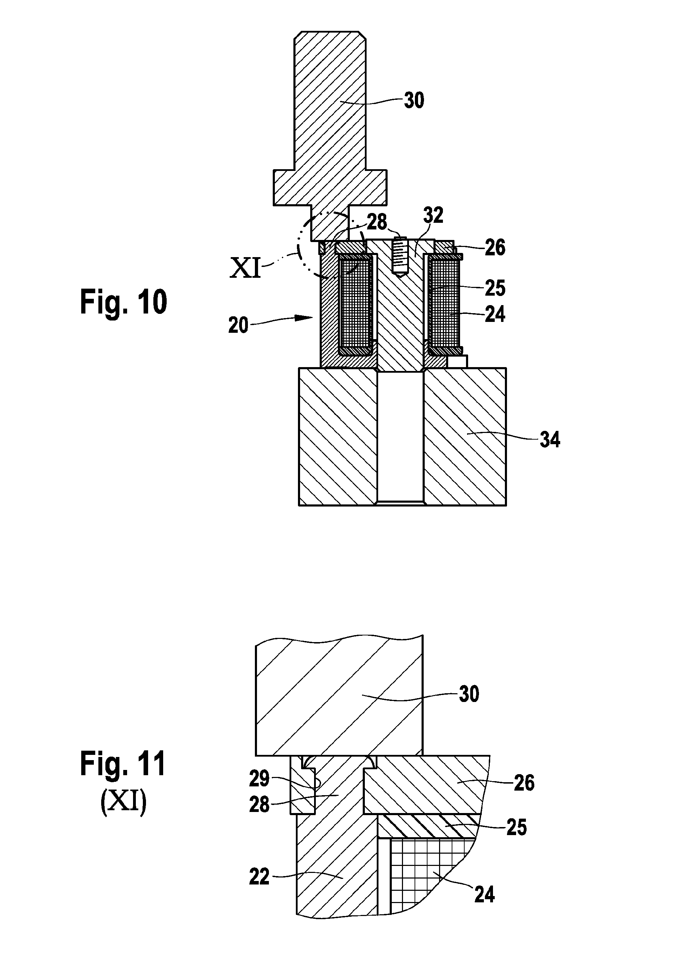

Zur Verbindung des dreischenkligen Gehäusemantels 21 und der Abdeckplatte 26 ist an die Gehäuseschenkel 22 jeweils ein Zapfen 28 angeformt. Die angeformten Zapfen 28 sind jeweils mit einer zugehörigen in die Abdeckplatte 26 eingebrachten abgestuften Bohrung 29 verstemmt. Bei der Verwendung des MIM-Verfahrens zur Herstellung des dreischenkligen Gehäusemantels 21 können die zur Verstemmung erforderlichen Zapfen 28 kostenneutral hergestellt werden. Diese Art der Verbindung stellt sicher, dass die das Eisenkreisunterteil bildende Abdeckplatte 26 formschlüssig an den das Eisenkreisoberteil bildenden dreischenkligen Gehäusemantel 21 angepresst wird. Wie aus Fig. 10 und 11 ersichtlich ist, wird die Magnetbaugruppe 20 zum Verpressen der Zapfen 28 auf einer Aufnahmevorrichtung 34 platziert, wobei die Eisenkreisteile mit Hilfe eines Führungsdorns 32 beim Verpressen der Zapfen 28 radial zueinander genau ausgerichtet werden können. Die an die Gehäuseschenkel 22 angeformten Zapfen 28 werden jeweils durch zugehörige abgestufte Bohrungen 29 in der Abdeckplatte 26 eingeführt und dann mit einem Verstemmstempel 30 stirnseitig gestaucht, wobei das Material des jeweiligen Zapfens 28 in die stirnseitige Vertiefung der zugehörigen abgestuften Bohrung 29 fließt und so die Abdeckplatte 26 mit den Gehäuseschenkeln 22 verbindet.

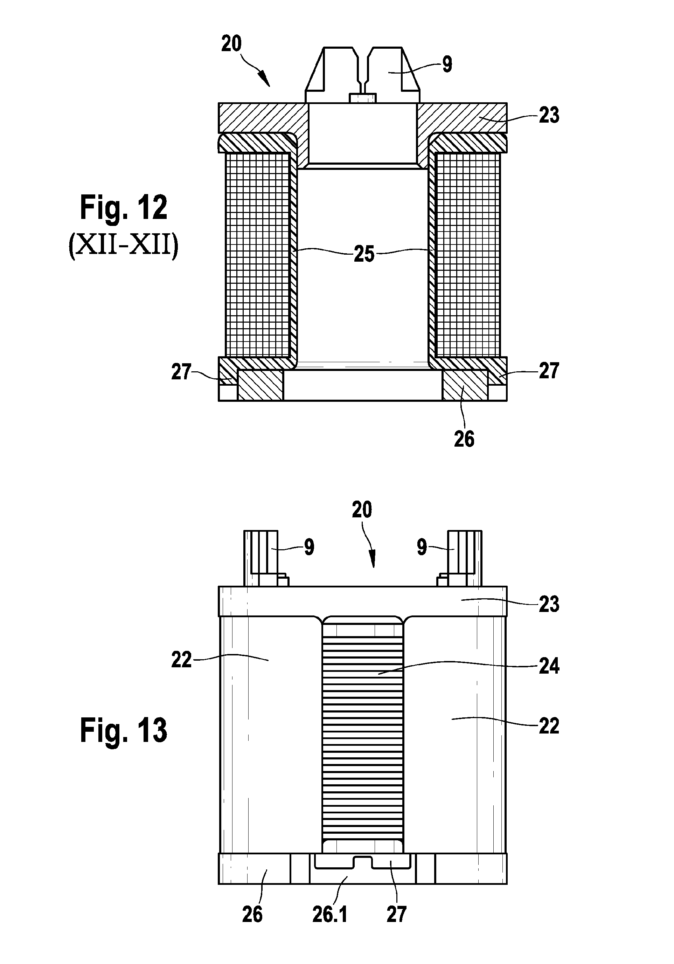

Durch seitlich an den Wicklungsträger 25 angebrachte Fixierlaschen 27 steht durch den Entfall der Abstandsnoppen mehr Bauraum für die Spulenwicklung 24 Verfügung, so dass bei gleichem Bauraum des Eisenkreises mehr Magnetkraft zur Verfügung gestellt werden kann. Wie insbesondere aus Fig. 12 bis 14 ersichtlich ist, greifen die seitlich angebrachten Fixierlaschen 27 unterhalb der Auflagefläche des Wicklungsträgers 25 auf der Abdeckplatte 26 in Aussparungen 26.1 ein. Die Enden der Fixierlaschen 27 sind so groß ausgebildet, dass sie unter die Ecken der Gehäuseschenkel 22 des dreischenkligen Gehäusemantels 21 ragen. Dadurch wird verhindert, dass der Wicklungsträger 25 axial von der Auflagefläche wegrutscht.

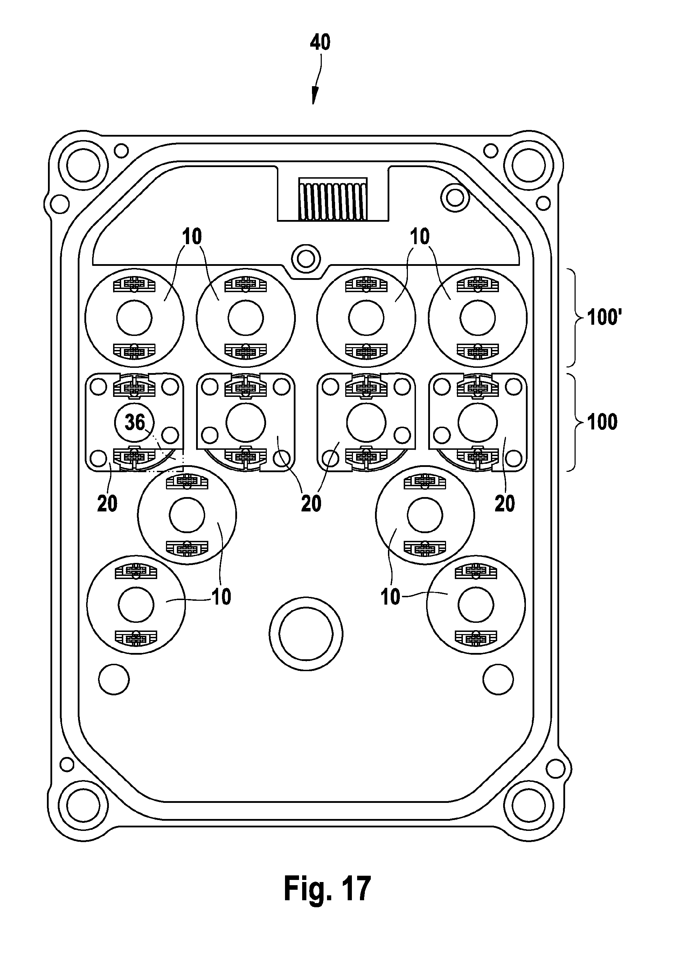

Wie aus Fig. 17 ersichtlich ist, umfasst ein Ausführungsbeispiel einer erfindungsgemäßen Fluidbaugruppe 40 mehrere herkömmliche Magnetventile 100', deren Magnetbaugruppen 10 jeweils einen im Wesentlichen runden Querschnitt aufweisen, und mehrere erfindungsgemäße Magnetventile 100, deren Magnetbaugruppen 20 jeweils einen dreischenkligen Gehäusemantel 21 aufweisen. Wie aus Fig. 17 weiter ersichtlich ist, sind die dreischenkligen Gehäusemäntel 21 der erfindungsgemäßen Magnetventile 100 so ausgerichtet, dass der vorhandene Bauraum auf der Fluidbaugruppe 40 optimal ausgenutzt wird. Dadurch können herkömmliche auf der Fluidbaugruppe 40 angeordnete Magnetventile 100' problemlos durch die erfindungsgemäßen Magnetventile 100 ersetzt werden, wenn aufgrund veränderter Anforderungen eine höhere Magnetkraft zur Verfügung gestellt werden soll.

## Patentansprüche

1. Magnetventil mit einer Magnetbaugruppe, die ein Eisenkreisoberteil (12), ein Eisenkreisunterteil (13) und einen mit einer Spulenwicklung (24) bewickelten Wicklungsträger (25) umfasst, **dadurch gekennzeichnet, dass** der Eisenkreisoberteil (12) aus einem Gehäusemantel (21) gebildet ist, der ein Gehäuseoberteil (23) und drei mit dem Gehäuseoberteil (23) verbundene Gehäuseschenkel (22) umfasst, wobei der dreischenklige Gehäusemantel (21) zur Bildung eines Magnetkreises (11) spaltfrei mit dem Eisenkreisunterteil (13) verbunden ist.

2. Magnetventil nach Anspruch 1, **dadurch gekennzeichnet, dass** der dreischenklige Gehäusemantel (21) als Formteil ausgeführt ist, das mit einem MIM-Verfahren hergestellt ist.

3. Magnetventil nach Anspruch 1 oder 2, **dadurch gekennzeichnet, dass** das Eisenkreisunterteil (13) als Abdeckplatte (26) ausgeführt ist, die formschlüssig an den dreischenkligen Gehäusemantel (21) angepresst ist.

4. Magnetventil nach Anspruch 3, **dadurch gekennzeichnet, dass** an die Gehäuseschenkel (22) jeweils ein Zapfen (28) angeformt ist, die jeweils mit einer zugehörigen in die Abdeckplatte (26) eingebrachten abgestuften Bohrung (29) verstemmt sind.

5. Magnetventil nach Anspruch 4, **dadurch gekennzeichnet, dass** die Magnetbaugruppe (20) während der Verstemmung der an die Gehäuseschenkel (22) angeformten Zapfen (28) in den zugehörigen in die Abdeckplatte (26) eingebrachten abgestuften Bohrung (29) von einem eingeführten Führungsdorn (32) radial geführt ist.

6. Magnetventil nach einem der Ansprüche 1 bis 5, **dadurch gekennzeichnet, dass** die drei Gehäuseschenkel (22) des Gehäusemantels (21) in Eckbereichen (36) angeordnet sind, die am Rand um die im Wesentlichen runde Spulenwicklung (25) angeordnet sind und an einer Außenkontur des mit der Spulenwicklung (24) bewickelten Wicklungsträgers (25) anliegen.

7. Magnetventil nach einem der Ansprüche 1 bis 6, **gekennzeichnet durch** seitlich an den Wicklungsträger (25) angebrachte Fixierlaschen (27), die unterhalb der Auflagefläche des Wicklungsträgers (25) auf der Abdeckplatte (26) in Aussparungen (26.1) eingreifen, die an der Abdeckplatte (26) angeordnet sind.

8. Magnetventil nach Anspruch 7, **dadurch gekennzeichnet, dass** die Enden der Fixierlaschen (27) so groß ausgeführt sind, dass sie unter Ecken der Gehäuseschenkel (22) des dreischenkligen Gehäusemantels (21) ragen.

9. Fluidbaugruppe **gekennzeichnet durch** mindestens ein Magnetventil (100) nach einem der Ansprüche 1 bis 8.

10. Fluidbaugruppe nach Anspruch 9, **dadurch gekennzeichnet, dass** der dreischenklige Gehäusemantel (21) des mindestens einen Magnetventils (100) in Abhängigkeit vom vorhandenen Bauraum auf der Fluidbaugruppe (40) ausgerichtet ist.
